# EUROPÄISCHE PATENTANMELDUNG

(11) **EP 4 635 904 A1**
(43) Veröffentlichungstag der Anmeldung: **22.10.2025**
(21) Anmeldenummer: 24020116.0
(22) Anmeldetag: 15.04.2024
(51) Int. Cl.: C01B 3/04, B01D 53/047, C01B 3/50

(54) **VERFAHREN UND ANLAGE ZUR GEWINNUNG EINES WASSERSTOFF ENTHALTENDEN PRODUKTS UNTER VERWENDUNG VON AMMONIAK**

(71) Anmelder: Linde GmbH, 82049 Pullach (DE)
(72) Erfinder: Heinzel, Albrecht, 82049 Pullach (DE); Reinke, Michael, 82049 Pullach (DE); Murer, Martin, 82049 Pullach (DE)
(74) Vertreter: Fischer, Werner

(57) **Zusammenfassung**

Die Erfindung betrifft ein Verfahren sowie eine Vorrichtung (100) zur Herstellung eines Wasserstoff enthaltenden Produkts, bei dem ein Ammoniakeinsatz (1) in einen brennerbefeuerten Ammoniakcracker (10) eingeleitet wird, um mit katalytischer Unterstützung zu einem Wasserstoff, Stickstoff sowie Ammoniak enthaltenden Spaltgas (2) umgesetzt zu werden, das nachfolgend unter Erhalt einer gegenüber dem Spaltgas (2) an Wasserstoff angereicherten und an Ammoniak abgereicherten Produktfraktion (3) und eines gegenüber dem Spaltgas (2) an Wasserstoff abgereicherten und an Ammoniak angereicherten Restgases (4) einer Druckwechseladsorption (20) unterworfen wird. Kennzeichnend hierbei ist, dass das Restgas (4) in einem Gasejektor (30), in dem ein Brenngaseinsatz (5) als Treibmedium dient, verdichtet und mit dem Brenngaseinsatz (5) zu einem Brenngas (6) zusammengeführt wird, von dem zumindest ein Teil zur Befeuerung des Ammoniakcrackers (10) verbrannt wird.

## Beschreibung

Die Erfindung betrifft ein Verfahren und eine Anlage zur Gewinnung eines Wasserstoff enthaltenden Produkts unter Verwendung von Ammoniak.

### Hintergrund der Erfindung

Ammoniak (NH₃) kann gemäß 2 NH₃ → N₂ + 3 H₂ katalytisch zu Stickstoff (N₂) und Wasserstoff (H₂) zerlegt (gecrackt, gespalten) werden. Die Reaktion ist endotherm und wird durch niedrigen Druck und hohe Temperatur begünstigt. Um einen Wasserstoffverdichter zu vermeiden, sind dennoch höhere Spaltdrücke wünschenswert.

Die Hauptreaktionsprodukte Wasserstoff und Stickstoff können in einem Gemisch als Produkt bereitgestellt werden oder es kann eine Aufreinigung des Wasserstoffs erfolgen. Ein Wasserstoff-Stickstoff-Gemisch wird dabei auch als Formiergas bezeichnet. Auch eine weitere Nutzung des Wasserstoffs bzw. Wasserstoff-Stickstoff-Gemischs, beispielsweise in einer Gasturbine, die mit einem Generator gekoppelt ist, kann erfolgen. In allen Fällen, die jeweils Ausgestaltungen der Erfindung entsprechen können, wird also Wasserstoff aus Ammoniak gewonnen. Die "Gewinnung eines Wasserstoff enthaltenden Produkts" im hier verstandenen Sinn schließt also die Gewinnung eines wasserstoffhaltigen Gasgemischs, weiterer Produkte wie Stickstoff und/oder die anschließende Nutzung nicht aus.

Aus der Patent- und Nichtpatentliteratur sind unterschiedliche Verfahrenskonzepte und Reaktoren für die Zerlegung von Ammoniak zu Wasserstoff und Stickstoff beschrieben. Zu weiteren Details wird auf entsprechende Literatur verwiesen, statt vieler beispielsweise auf D. Sima et al., Int. J. Hydrogen Energy 45 (2020) 9342-9352.

Entsprechende Verfahrenskonzepte können eine Reaktionseinheit (auch als Ammoniakcracker bezeichnet) nach Art eines Dampfreformers umfassen, der eine Druckwechseladsorption (DWA, engl.: pressure swing adsorption, PSA) zur Wasserstoffreinigung zugeordnet ist. Beispielsweise sei in diesem Zusammenhang auf die EP 4 112 539 A1 und die EP 4 112 540 A1 verwiesen.

In entsprechenden Konzepten kann der Wasserstoff mittels der Druckwechseladsorption von einem Restgas abgetrennt werden, wobei das Restgas zur Befeuerung des Ammoniakcrackers verwendet werden kann. Zusätzliche Feuerungsleistung kann durch die Verbrennung von reinem Ammoniak bereitgestellt werden. Das massenstrombasierte Verhältnis von Brennstoff zu Verbrennungsluft ist bei der Ammoniakspaltung ca. 1:2 im Vergleich zu 1:4 bei der klassischen Dampf-Methan-Reformierung. Je höher das Verhältnis, desto mehr ist eine Vorwärmung des Brenngases sinnvoll, wozu jedoch ein zusätzlicher Brenngasvorwärmer benötigt wird. Die zusätzliche Ausrüstung erfordert einen höheren Druck des durch die Druckwechseladsorption erzeugten Restgases. Durch die Erhöhung des Restgasdrucks verringert sich allerdings die Wasserstoffausbeute des DWA-Systems, so dass das DWA-System vergrößert werden muss.

Die vorliegende Erfindung stellt sich die Aufgabe, die Wärmeerzeugung in entsprechenden Verfahren und Anlagen zur Gewinnung eines Wasserstoffprodukts zu verbessern.

### Offenbarung der Erfindung

Vor diesem Hintergrund werden ein Verfahren und eine Anlage zur Gewinnung eines Wasserstoff enthaltenden Produkts mit den Merkmalen der unabhängigen Patentansprüche vorgeschlagen. Ausgestaltungen sind Gegenstand der abhängigen Patentansprüche und der nachfolgenden Beschreibung.

Wenn im Folgenden von einem "Anteil" oder einem "Teil" eines Gases gesprochen wird, kann dabei ein (lediglich) durch Aufteilen des Gases gebildeter Teilstrom, also eine Teilmenge mit denselben Gehalten an Komponenten wie das Gas, sein, ein "Anteil" kann aber auch eine Fraktion sein, die in einer sich anschließenden Trennung wie einer Druckwechseladsorption gebildet wird. Auch Kombinationen können vorgesehen sein.

Es wird ein Verfahren zur Herstellung eines Wasserstoff enthaltenden Produkts, vorgeschlagen, bei dem zumindest ein Teil eines Ammoniakeinsatzes in einen brennerbefeuerten Ammoniakcracker eingeleitet wird, um mit katalytischer Unterstützung zu einem Wasserstoff, Stickstoff sowie Ammoniak enthaltenden Spaltgas umgesetzt zu werden, das nachfolgend unter Erhalt einer gegenüber dem Spaltgas an Wasserstoff angereicherten und an Ammoniak abgereicherten Produktfraktion und eines gegenüber dem Spaltgas an Wasserstoff abgereicherten und an Ammoniak angereicherten Restgases einer Druckwechseladsorption unterworfen wird. Das Restgas liegt dabei insbesondere mit einem Absolutdruck von höchstens 1,9 bar, höchstens 1,5 bar oder höchstens 1,1 bar vor.

Die Produktfraktion kann insbesondere zu mehr als 75%, 80%, 90%, 95%, 98%, 99%, 99,5%, 99,9% oder 99,99% aus Wasserstoff bestehen und entsprechend 0,01 bis 25% an anderen Gaskomponenten aufweisen. Insbesondere kann die Produktfraktion auch ein sogenanntes Formiergas sein, dass sich beispielsweise zu 75% aus Wasserstoff und zu 25% aus Stickstoff zusammensetzt. Das Restgas kann insbesondere 0 bis 10% Ammoniak aufweisen und ansonsten Stickstoff und Wasserstoff enthalten, ggf. auch Wasser, falls technischer Ammoniak als Ammoniakeinsatz verwendet wird.

Das Restgas wird in einem Gasejektor, in dem ein Brenngaseinsatz als Treibmedium dient, verdichtet und mit dem Brenngaseinsatz zu einem Brenngas zusammengeführt. Anschließend wird das Brenngas zur Bereitstellung der dem Ammoniakcracker zugeführten Wärme oder eines Teils hiervon verfeuert. Bei dem Brenngaseinsatz handelt es sich insbesondere um ein Ammoniakgemisch, wie beispielsweise technisches Ammoniak, oder um reines Ammoniak. Vorzugseise handelt es sich bei dem Brenngaseinsatz um einen Teil des Ammoniakeinsatzes. Auch die Verwendung eines kohlenwasserstoffhaltigen Gases, wie beispielsweise Erdgas, oder eines Teils des im Ammoniakcracker erzeugten Spaltgases ist möglich.

Durch den Einsatz des Gasejektors wird einerseits das DWA-Restgas effektiv mit einem Brenngaseinsatz zu einem Brenngas gemischt und gleichzeitig kann der Druck des Restgases am Druckwechseladsorber geringgehalten werden, wodurch sich die Effizienz der Druckwechseladsorption und damit die Gesamteffizienz der Wasserstofferzeugung erhöhen.

Anders als im Stand der Technik, wo der des mit einem Druck von bis zu 40 bar vorliegende Brenngaseinsatzes zur Erzeugung des Brenngases auf den Druck des DWA-Restgases entspannt wird, ermöglicht das erfindungsgemäße Verfahren, ein Brenngas mit deutlich höherem Druck zu erhalten und diese beispielsweise über einen kostengünstig als Lanze ausgebildeten Brenner zu verfeuern. Gleichzeitig verbessern sich durch den erhöhten Druck das Flammenbild, sowie das Ausbrand- und Teillastverhalten des Brenners.

In einer Ausführungsform wird der Brenngaseinsatz beispielsweise aus einer ammoniakhaltigen Flüssigphase durch Druckerhöhung und anschließende Verdampfung und/oder Überhitzung erzeugt. Die ammoniakhaltige Flüssigphase kann dabei ein Teil des Ammoniakeinsatzes sein.

In einer anderen Ausführungsform wird der Brenngaseinsatz oder ein Teil hiervon oder das Brenngas vor der Verfeuerung vorgeheizt. Dabei kann insbesondere nur der Brenngaseinsatz vorgeheizt werden. In diesem Fall wird der Brenngaseinsatz insbesondere auf eine höhere als die für die Verbrennung optimale Temperatur vorgeheizt, da bei der anschließenden Mischung des Brenngaseinsatzes mit dem DWA-Restgas die Temperatur wiederum sinkt.

Auch eine erhöhte Temperatur des Brenngases führt zu einer Verbesserung von Flammenbild, sowie Ausbrand- und Teillastverhalten des Brenners.

In einer weiteren Ausführungsform wird zum Vorheizen des Brenngaseinsatzes oder des Brenngases ein elektrischer Heizer verwendet.

In einer weiteren Ausführungsform wird das Spaltgas, bevor es der Druckwechseladsorption unterworfen wird, unter Erhalt eines abgekühlten Spaltgases einer Wärmeintegration unterzogen. Dabei dem Spaltgas entnommene Wärme kann insbesondere über einen Wärmeübertrager zum Vorheizen des Brenngaseinsatzes, eines Teils hiervon oder des Brenngases verwendet werden. Weiterhin kann Wärme des Spaltgases zum Verdampfen und/oder Überhitzen des Ammoniakeinsatzes, bevor diese dem Ammoniakcracker zugeführt wird, verwendet werden. Dadurch kann die Gesamteffizienz des Verfahrens in Hinblick auf die im Verfahren entstehende Wärme verbessert werden.

Zur Vorwärmung von Brenngas oder Brenngaseinsatz kann neben im Prozess selbst abfallender Wärme (Wärmeintegration) auch Wärme eingesetzt, die unabhängig von den Betriebsverhältnissen in einem elektrischen Vorwärmer erzeugt wird. Dadurch kann die Lastflexibilität des Verfahrens erhöht werden, da das Brenngas oder der Brenngaseinsatz auch dann ausreichend hoch vorgewärmt werden kann, wenn keine oder nur geringe Wärmemengen im Prozess abfallen, wie dies beispielsweise im Anfahrbetrieb der Fall ist kann.

In einer Ausführungsform wird Wärme des bei der Verfeuerung des Brenngases gebildeten Rauchgases oder ein Teil hiervon zur Vorwärmung einer der Verfeuerung zugeführten Verbrennungsluft und/oder zum Vorheizen des zur Erzeugung der dem Ammoniakcracker zugeführten Wärme verwendeten Brenngases und/oder des Brenngaseinsatzes verwendet.

Die Wärme des heißen Spaltgases kann also insbesondere unter Verwendung eines entsprechenden Wärmeübertragers zurückgewonnen werden, um das Brenngas und/oder den Brenngaseinsatz zu erwärmen. Insbesondere bei der Vorwärmung der Verbrennungsluft mit heißem Rauchgas, wird die Rauchgasaustrittstemperatur auf 50 bis 150°C gesenkt. Eine Kondensation des Rauchgases ist vorteilhafterweise zu vermeiden, da es in dem entsprechenden Wärmeübertrager zu Korrosion kommen kann.

In einer Ausführungsform umfasst die Ammoniakspaltung eine Vor- und eine Hauptspaltung. Zur Vorspaltung kann ein adiabatischer Vorcracker eingesetzt werden, d.h. im Vorcracker wird der Ammoniakeinsatz ohne Wärmezufuhr teilweise umgesetzt. Dabei sinkt die Temperatur des Gasgemisches. Dem Hauptcracker, in den der im adiabatischen Vorcracker teilweise umgesetzte Ammoniakeinsatz zur Hauptspaltung eingeleitet wird, wird dagegen Wärme zugeführt.

Da Hauptspaltung bei niedriger Temperatur erfolgen kann und aufgrund des geringeren Ammoniakanteils des Ammoniakeinsatzes, wird eine Nitridierung reduziert bzw. komplett verhindert werden, wodurch sich die Kosten für die Auslegung der zur Umsetzung des Ammoniakeinsatzes verwendeten Reaktoren verringern, da diese nicht bzw. in geringerem Umfang vor Nitridierung geschützt werden müssen.

In einer Ausführungsform wird der brennerbefeuerte Ammoniakcracker mit einer Rauchgasrückführung bzw. Rauchgasrezirkulation betrieben. Er kann dabei insbesondere, wie bereits eingangs erläutert, nach Art eines befeuerten Reformierreaktors ausgestaltet sein und einen Ofenraum aufweisen, innerhalb dessen die Rauchgasrückführung bzw. Rauchgasrezirkulation realisiert wird. Auf diese Weise kann die Temperatur des Rauchgases beim Austritt aus der Strahlungszone, unter entsprechender Reduzierung anderenfalls stattfindender Wärmeverluste, auf einen Wert von ca. 150 bis 200 K oberhalb der Reaktoraustrittstemperatur reduziert werden. Dadurch können in entsprechenden Ausgestaltungen der vorliegenden Erfindung auch andere Vorteile, wie eine Verringerung der Bildung von Stickstoffoxiden, realisiert werden.

Ausgestaltungen der vorliegenden Erfindung können auch umfassen, dass das erhaltene Produkt oder ein Teil hiervon zur Erzeugung elektrischer Energie in einer mit einem Generator gekoppelten Gasturbine verbrannt wird.

Die Erfindung betrifft weiterhin eine Anlage zur Herstellung eines Wasserstoff enthaltenden Produkts, mit einem brennerbefeuerten Ammoniakcracker, in dem ein Ammoniakeinsatz unter Erhalt eines Wasserstoff, Stickstoff und Ammoniak enthaltenden Spaltgase katalytisch umgesetzt wird, und einem Druckwechseladsorber, mit dem aus dem Spaltgas eine an Wasserstoff angereicherte und an Ammoniak abgereicherte Produktfraktion sowie ein an Wasserstoff abgereichertes und an Ammoniak angereichertes Restgas erhältlich ist.

Erfindungsgemäß umfasst die Anlage einen Gasejektor, in dem ein Brenngaseinsatz als Treibmedium einsetzbar ist, und der mit dem Brennerbefeuerten Ammoniakcracker und dem Druckwechseladsorber so verbunden ist, dass das Restgas im Gasejektor verdichtet und mit dem Brenngaseinsatz zu einem Brenngas zusammengeführt werden kann, von dem anschließend zumindest ein Teil zur Bereitstellung von dem Ammoniakcracker zuzuführender Wärme verfeuert werden kann. Insbesondere ist die Anlage zur Durchführung der zuvor beschriebenen Verfahrensausgestaltungen ausgelegt.

### Kurze Beschreibung der Zeichnung

Ausgestaltungen der Erfindung werden nachfolgend rein beispielhaft unter Bezugnahme auf die beigefügte Zeichnung unter Erläuterung des technischen Hintergrunds beschrieben.
Figur 1 veranschaulicht ein Verfahren bzw. eine Anlage gemäß einer Ausführungsform der vorliegenden Erfindung,
Figur 2 veranschaulicht ein Verfahren bzw. eine Anlage gemäß einer weiteren Ausführungsform der vorliegenden Erfindung,
Figur 3 veranschaulicht ein Verfahren bzw. eine Anlage gemäß einer weiteren Ausführungsform der vorliegenden Erfindung,
Figur 4 veranschaulicht ein Verfahren bzw. eine Anlage gemäß einer weiteren Ausführungsform der vorliegenden Erfindung, und
Figur 5 veranschaulicht ein Verfahren bzw. eine Anlage gemäß einer weiteren Ausführungsform der vorliegenden Erfindung.

### Ausgestaltungen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

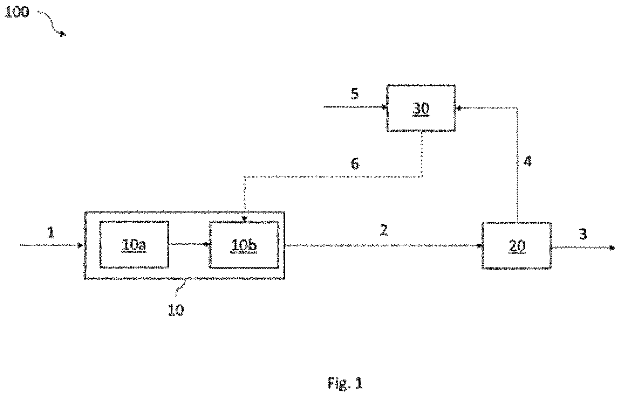

In Figur 1 sind ein Verfahren bzw. eine Anlage gemäß einer Ausgestaltung der vorliegenden Erfindung veranschaulicht. Das Verfahren bzw. die Anlage sind insgesamt mit 100 bezeichnet.

Ein Ammoniakeinsatz 1, beispielsweise aus einem Tank, wird, falls erforderlich, mittels mit einer Pumpe unter Druck gesetzt und einer Vorbehandlung unterzogen. Die Vorbehandlung umfasst dabei insbesondere ein Verdampfen und Überhitzen des Ammoniakeinsatzes 1. Der Ammoniakeinsatz 1 bzw. der verdampfte und überhitzte Ammoniakeinsatz 1 wird dem Ammoniakcracker 10 zugeführt und in diesem unter Erhalt eines nicht umgesetzten Ammoniak sowie Wasserstoff und Stickstoff enthaltenden Spaltgases 2 katalytisch umgesetzt.

Der Ammoniakcracker 10 weist dabei einen adiabatischen Vorcracker 10a und einen brennerbefeuerten Hauptcracker 10b auf. Im adiabatischen Vorcracker 10a wird ein Teil des Ammoniakeinsatzes 1 umgesetzt, um einen teilweise umgesetzten Ammoniakeinsatz zu erhalten, der anschließend dem befeuerten Hauptcracker 10b zugeführt, in diesem unter Wärmezufuhr weiter umgesetzt wird. Zwischen dem Vorcracker 10a und dem Hauptcracker 10b ist insbesondere ein Wärmeübertrager angeordnet, der dazu eingerichtet ist, den zumindest teilweise umgesetzten Ammoniakeinsatz nochmals zu erwärmen, bevor dieser dem Hauptcracker 10b zugeführt wird. Der Hauptcracker 10b kann dabei eines oder mehrere Katalysatorbetten aufweisen. Bei den hohen, im befeuerten Hauptcracker 10a herrschenden Temperaturen eignet sich insbesondere ein Katalysator auf Nickel-Basis.

Das im Hauptcracker 10b erhaltene Spaltgas 2 wird einer Druckwechseladsorption 20 unterworfen. Nicht umgewandeltes Ammoniak wird mittels der Druckwechseladsorption 20 in ein Restgas 4 überführt, während ferner eine Produktfraktion 3 gewonnen wird, die hauptsächlich Wasserstoff enthält, aber auch Spuren von Stickstoff enthalten kann. Wasser, das auch in "wasserfreiem" Ammoniak technischer Qualität enthalten sein, kann, wird optional mit dem Ammoniak abgetrennt und in das Restgases 4 überführt.

Das Restgas 4 wird anschließend mit einem Brenngaseinsatz 5 in einem Gasejektor 30 gemischt. Der Brenngaseinsatz 5 wird durch Verdichten, insbesondere durch eine Pumpe, und Verdampfen und Überhitzen bereitgestellt. Als Brenngaseinsatz 5 kann ein Ammoniakgemisch, insbesondere von reinem bzw. technischem Ammoniak oder Erdgas eingesetzt werden. Der Brenngaseinsatz 5 wird dabei als Treibmedium in dem Gasejektor 30 genutzt. Da der Brenngaseinsatz 5 einen höheren Druck als das durch die Druckwechseladsorption 20 erhaltene Restgas 4, welches insbesondere einen Druck von höchstens 1,9 bara oder höchstens 1,5 bara oder höchstens 1,1 bara aufweist, hat, wird das Restgas 4 mit dem Brenngaseinsatz 5 gemischt und auf ein höheres Druckniveau gebracht. Das so gebildete Brenngas 6 wird anschließend in einem Brenner zur Bereitstellung von Wärme für den Ammoniakcracker 10 verfeuert.

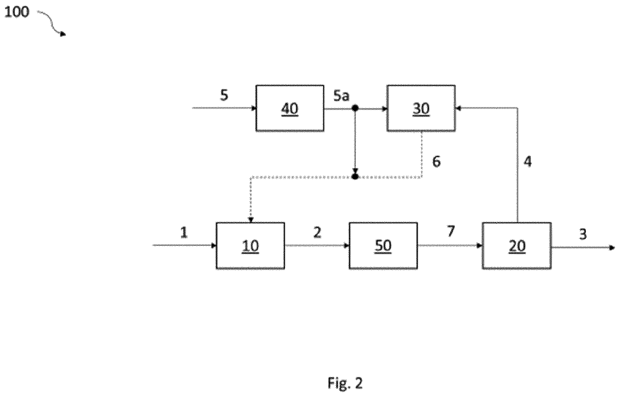

In Figur 2 sind ein Verfahren bzw. eine Anlage gemäß einer weiteren Ausgestaltung der vorliegenden Erfindung veranschaulicht. Das Verfahren bzw. die Anlage sind insgesamt mit 100 bezeichnet. Dabei bezeichnen gleiche Bezugszeichen die gleichen Verfahrensschritte bzw. Anlageneinheiten wie in Figur 1. Auf eine Beschreibung dieser Teile wird im weiteren Verlauf verzichtet und auf die Beschreibung der Figur 1 verwiesen.

In der durch Figur 2 dargestellten Ausführungsform des Verfahrens bzw. der Anlage 100 wird das Spaltgas 2 nach dem Ammoniakcracker 10 unter Erhalt von abgekühltem Spaltgas 7 einer Wärmeintegration 50 unterworfen, bevor es der Druckwechseladsorption 20 zugeführt wird. Die dem Spaltgas 2 dabei entnommene Wärme kann beispielsweise in der Vorbehandlung zum Verdampfen und/oder Überhitzen des Ammoniakeinsatzes 1 verwendet werden.

Der Brenngaseinsatz 5 wird wiederum durch Verdichten und Verdampfen von Ammoniak oder Erdgas bereitgestellt. Anschließend wird der Brenngaseinsatz 5 einem elektrischen Heizer 40 zugeführt, durch den der Brenngaseinsatz 5 auf eine vorgegebene Temperatur erhöht wird. Darauffolgend wird ein Teil des erwärmten Brenngaseinsatzes 5a im Gasejektor 30 mit dem Restgas 4 gemischt. Der verbleibende Teil wird stromabwärts des Gasejektors 30 dem Brenngas 6 zugeführt. Das so erzeugte Brenngas wird daraufhin zur Erzeugung der dem Ammoniakcracker 10 zugeführten Wärme oder eines Teils hiervon verfeuert.

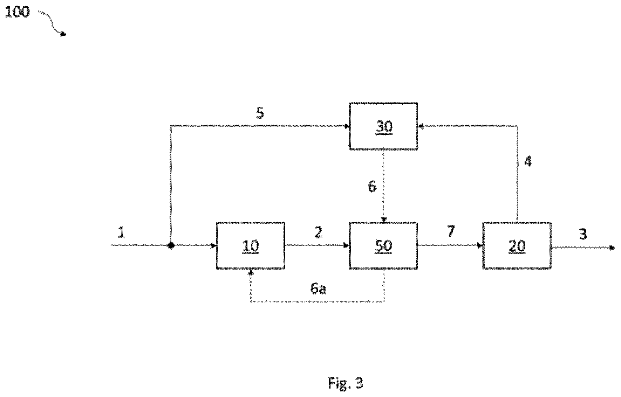

In Figur 3 sind ein Verfahren bzw. eine Anlage gemäß einer weiteren Ausgestaltung der vorliegenden Erfindung veranschaulicht. Das Verfahren bzw. die Anlage sind insgesamt mit 100 bezeichnet. Dabei bezeichnen gleiche Bezugszeichen die gleichen Verfahrensschritte bzw. Anlageneinheiten wie in den Figuren 1 und 2. Auf eine Beschreibung dieser Teile wird im weiteren Verlauf verzichtet und auf die Beschreibung der Figuren 1 und 2 verwiesen.

Im Gegensatz zu den in Figur 1 und 2 dargestellten Verfahren bzw. dargestellten Anlage 100 wird der Brenngaseinsatz 5 nicht durch Verdichten und Verdampfen von Ammoniak bereitgestellt, sondern es wird ein Teil des Ammoniakeinsatzes 1, der dem Ammoniakcracker 10 zugeführt wird, entnommen und als Brenngaseinsatz 5 verwendet. Wie bereits in Bezug auf Figur 1 beschrieben, kann der Ammoniakeinsatz 1 durch eine Pumpe verdichtet und durch eine Vorbehandlungseinheit (nicht gezeigt) verdampft und überhitzt worden sein.

Nachdem der Brenngaseinsatz 5 mit dem Restgas 4 im Gasejektor 30 gemischt worden ist, wird das Brenngas 6 erwärmt. Dazu wird, im Gegensatz zur in Bezug auf Figur 2 beschriebenen Ausführungsform kein elektrischer Heizer 40 verwendet, sondern die bei der Wärmeintegration 50 dem Spaltgas 2 entnommene Wärme wird zur Erwärmung des Brenngases 6 verwendet. Dazu kann beispielsweise ein Wärmeübertrager verwendet werden, der die Wärme des Spaltgases 2 direkt auf das Brenngas 6, das als Kühlmittel verwendet wird, überträgt. Anschließend wird das so erwärmte Brenngas 6a zur Bereitstellung der dem Ammoniakcracker 10 zugeführten Wärme oder eines Teils hiervon verfeuert.

Es wird darauf hingewiesen, dass einzelne Aspekte der dargelegten Ausführungsformen auch miteinander kombiniert werden können. So kann beispielsweise Wärme aus der Wärmeintegration 50 auf den Brenngaseinsatz 5 übertragen oder das Brenngas 6 durch einen elektrischen Heizer erwärmt werden. Weiterhin ist denkbar, dass der Brenngaseinsatz 5 und/oder das Brenngas 6 durch die Übertragung von Wärme des Spaltgases 2 und durch einen elektrischen Heizer 40 erwärmt wird.

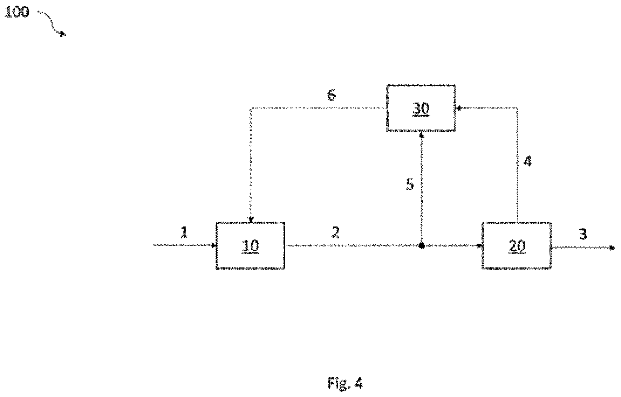

In Figur 4 sind ein Verfahren bzw. eine Anlage gemäß einer weiteren Ausgestaltung der vorliegenden Erfindung veranschaulicht. Das Verfahren bzw. die Anlage sind insgesamt mit 100 bezeichnet. Dabei bezeichnen gleiche Bezugszeichen die gleichen Verfahrensschritte bzw. Anlageneinheiten wie in den Figuren 1 bis 3. Auf eine Beschreibung dieser Teile wird im weiteren Verlauf verzichtet und auf die Beschreibung der Figuren 1 bis 3 verwiesen.

Im in Figur 4 gezeigten Ausführungsbeispiel wird als Brenngaseinsatz 5 ein Teil des Spaltgases 2 verwendet. Wird diese Ausführungsform weiterhin mit einer Wärmeintegration 50, wie in den Figuren 2 und 3 dargestellt, kombiniert, kann der Brenngaseinsatz 5 ein Teil des Spaltgases 2 oder des abgekühlten Spaltgases 7 sein.

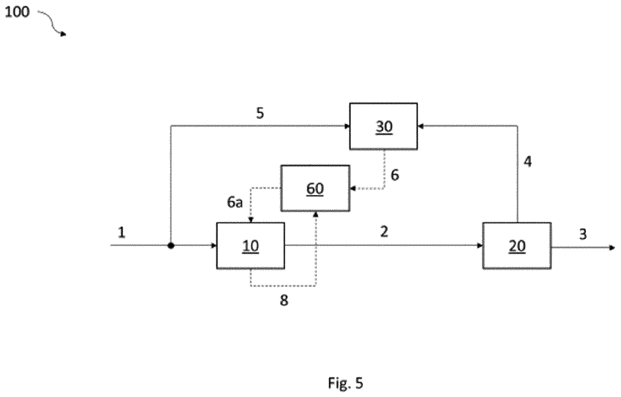

In Figur 5 sind ein Verfahren bzw. eine Anlage gemäß einer weiteren Ausgestaltung der vorliegenden Erfindung veranschaulicht. Das Verfahren bzw. die Anlage sind insgesamt mit 100 bezeichnet. Dabei bezeichnen gleiche Bezugszeichen die gleichen Verfahrensschritte bzw. Anlageneinheiten wie in den Figuren 1 bis 4. Auf eine Beschreibung dieser Teile wird im weiteren Verlauf verzichtet und auf die Beschreibung der Figuren 1 bis 4 verwiesen.

In Figur 5 wird das durch den Gasejektor 30 erzeugte Brenngas 6 wiederum einem Wärmeübertrager 60 zugeführt, in dem das Brenngas 6 zu vorgewärmten Brenngas 6a vorgeheizt wird, d.h. auf eine vorbestimmte Temperatur erwärmt wird. Zur Bereitstellung der Wärme im Wärmeübertrager 60 wird bei der Verfeuerung des Brenngases 6 bzw. des vorgewärmten Brenngases 6a entstehendes Rauchgas 8 verwendet, dass im Wärmeübertrager Wärme an das Brenngas 6 abgibt und dabei abkühlt.

## Patentansprüche

1. Verfahren (100) zur Herstellung eines Wasserstoff enthaltenden Produkts, bei dem ein Ammoniakeinsatz (1) in einen brennerbefeuerten Ammoniakcracker (10) eingeleitet wird, um mit katalytischer Unterstützung zu einem Wasserstoff, Stickstoff sowie Ammoniak enthaltenden Spaltgas (2) umgesetzt zu werden, das nachfolgend unter Erhalt einer gegenüber dem Spaltgas (2) an Wasserstoff angereicherten und an Ammoniak abgereicherten Produktfraktion (3) und eines gegenüber dem Spaltgas (2) an Wasserstoff abgereicherten und an Ammoniak angereicherten Restgases (4) einer Druckwechseladsorption (20) unterworfen wird, **dadurch gekennzeichnet, dass** das Restgas (4) in einem Gasejektor (30), in dem ein Brenngaseinsatz (5) als Treibmedium dient, verdichtet und mit dem Brenngaseinsatz (5) zu einem Brenngas (6) zusammengeführt wird, von dem zumindest ein Teil zur Befeuerung des Ammoniakcrackers (10) verbrannt wird.

2. Verfahren (100) nach Anspruch 1, wobei ein Teil des Ammoniakeinsatzes (1) und/oder ein Teil des Spaltgases (2) als Brenngaseinsatz (5) verwendet wird.

3. Verfahren (100) nach einem der Ansprüche 1 bis 2, wobei der Brenngaseinsatz (5) oder ein Teil hiervon oder das Brenngas (6) vor der Verfeuerung vorgeheizt wird.

4. Verfahren (100) nach Anspruch 3, wobei der Brenngaseinsatz (5) oder ein Teil hiervon oder das Brenngas (6) durch einen elektrischen Heizer (40) vorgeheizt wird.

5. Verfahren nach einem der vorhergehenden Ansprüche, wobei das Spaltgas (2), bevor es der Druckwechseladsorption (20) unterworfen wird, unter Erhalt eines abgekühlten Spaltgases (7) einer Wärmeintegration (50) unterworfen wird.

6. Verfahren nach Anspruch 5, wobei die dem Spaltgas (2) bei der Wärmeintegration (50) entnommene Wärme oder ein Teil hiervon zum Vorheizen des Brenngaseinsatzes (5) oder eines Teils hiervon oder des Brenngases (6) oder eines Teils hiervon verwendet wird.

7. Verfahren nach einem der vorhergehenden Ansprüche, wobei Wärme des bei der Verfeuerung des Brenngases (6) entstehenden Rauchgases zur Vorwärmung einer der Verfeuerung zugeführten Verbrennungsluft und/oder Brenngases (6) und/oder des Brenngaseinsatzes (5) verwendet wird.

8. Verfahren nach einem der vorhergehenden Ansprüche, wobei der Ammoniakcracker (10) mit einer Rauchgasrückführung betrieben wird.

9. Verfahren nach einem der vorhergehenden Ansprüche, wobei das Restgas (4) einen Druck von höchstens 1,9 bara oder höchstens 1,5 bara oder höchstens 1,1 bara hat.

10. Verfahren nach einem der vorhergehenden Ansprüche, wobei die Ammoniakspaltung eine adiabatische Vorspaltung (10a) und eine Hauptspaltung (10b) umfasst.

11. Verfahren nach einem der vorhergehenden Ansprüche, wobei der Brenngaseinsatz (5) Erdgas ist.

12. Anlage (100) zur Herstellung eines Wasserstoff enthaltenden Produkts, mit einem brennerbefeuerten Ammoniakcracker (10), in dem ein Ammoniakeinsatz (1) unter Erhalt eines Wasserstoff, Stickstoff und Ammoniak enthaltenden Spaltgase (2) katalytisch umgesetzt wird, und einem Druckwechseladsorber (20), mit dem aus dem Spaltgas eine an Wasserstoff angereicherte und an Ammoniak abgereicherte Produktfraktion (3) sowie ein an Wasserstoff abgereichertes und an Ammoniak angereichertes Restgas (4) erhältlich sind, **dadurch gekennzeichnet, dass** das sie einen Gasejektor (30) umfasst, in dem ein Brenngaseinsatz (5) als Treibmedium einsetzbar ist, und der mit dem Brennerbefeuerten Ammoniakcracker (10) und dem Druckwechseladsorber (20) so verbunden ist, dass das Restgas (4) im Gasejektor (30) verdichtet und mit dem Brenngaseinsatz (5) zu einem Brenngas (6) zusammengeführt werden kann, von dem anschließend zumindest ein Teil zur Bereitstellung von dem Ammoniakcracker (10) zuzuführender Wärme verfeuert werden kann.

13. Anlage (100) nach Anspruch 12, wobei die Anlage (100) dazu eingerichtet ist, ein Verfahren nach einem der Ansprüche 1 bis 11 durchzuführen.
